# EUROPÄISCHE PATENTANMELDUNG

(11) **EP 4 060 946 A1**
(43) Veröffentlichungstag der Anmeldung: **21.09.2022**
(21) Anmeldenummer: 21162795.5
(22) Anmeldetag: 16.03.2021
(51) Int. Cl.: H04L 12/42, H04L 29/06

(54) **AUTHENTIFIZIEREN EINES GERÄTES IN EINEM KOMMUNIKATIONSNETZ EINER AUTOMATISIERUNGSANLAGE**

(71) Anmelder: Siemens Aktiengesellschaft, 80333 München (DE)
(72) Erfinder: Görbing, Andrej, 10318 Berlin (DE); Hurrelmann, Jonas, 13347 Berlin (DE)

(57) **Zusammenfassung**

Die Erfindung betrifft ein Verfahren zum Authentifizieren eines Gerätes (30a) in einem Kommunikationsnetz (31) einer Automatisierungsanlage, bei dem eine das Gerät (30a) angebende Authentifizierungsinformation an einen Authentifizierungsserver (36) übertragen wird, der das Gerät (30a) als Teilnehmer in dem Kommunikationsnetz (31) zulässt oder ablehnt.

Um eine Authentifizierung eines Gerätes auch in einem redundant ausgelegten Kommunikationsnetz durchführen zu können, wird vorgeschlagen, dass das Kommunikationsnetz (31) einen Kommunikationsring (32) aufweist, der neben dem Gerät (30a) zumindest ein erstes und ein zweites Nachbargerät (30b, 30c) aufweist, wobei das Gerät (30a) zur redundanten Datenübertragung mit beiden Nachbargeräten (30b, 30c) verbunden ist. Das Gerät (30a) sendet zum Start der Authentifizierung die Authentifizierungsinformation enthaltende Authentifizierungsanfragen an die Nachbargeräte (30b, 30c). Die Nachbargeräte (30b, 30c) duplizieren die jeweilige empfangene Authentifizierungsinformation senden sie in beiden Übertragungsrichtungen über den Kommunikationsring (32) an einen mit dem Kommunikationsring (32) verbundenen Authentifizierungsserver (36), der anhand der jeweiligen empfangenen Authentifizierungsinformation jeweils eine Prüfung der Authentizität des Geräts (30a) durchführt und als Ergebnis der Prüfung das Gerät (30a) als Teilnehmer in dem Kommunikationsnetz (31) zulässt oder ablehnt.

Die Erfindung betrifft auch ein kommunikationsfähiges Gerät (30a) und ein Kommunikationsnetz (31) mit einem solchen Gerät (30a) .

## Beschreibung

Die Erfindung betrifft ein Verfahren zum Authentifizieren eines Gerätes in einem Kommunikationsnetz einer Automatisierungsanlage, bei dem eine das Gerät angebende Authentifizierungsinformation an einen Authentifizierungsserver übertragen wird und der Authentifizierungsserver basierend auf der Authentifizierungsinformation das Gerät als Teilnehmer in dem Kommunikationsnetz zulässt oder ablehnt.

Die Erfindung betrifft einerseits auch ein kommunikationsfähiges Gerät zum Anschluss an ein Kommunikationsnetz einer Automatisierungsanlage sowie andererseits ein Kommunikationsnetz mit einem solchen Gerät und einen Authentifizierungsserver.

Kommunikationsfähige Geräte, also Geräte, die an ein Kommunikationsnetz angeschlossen werden können und über dieses mit anderen Geräten Daten durch Übertragung entsprechender Datentelegramme bzw. Nachrichten austauschen, werden heutzutage in vielen Bereichen der Technik, z.B. bei der Automatisierung von Anlagen, eingesetzt. Ein Beispiel für den Einsatz solcher Geräte in einem Kommunikationsnetz ist eine Automatisierungsanlage, in der netzwerkfähige Automatisierungsgeräte (im Folgenden auch schlicht als "Geräte" bezeichnet) über das Kommunikationsnetz miteinander zum Austausch von Datentelegrammen verbunden sind. Automatisierungsanlagen dienen zur Automatisierung von Systemen, z.B. elektrischen Energieversorgungsnetzen oder elektrischen Schaltanlagen, und umfassen üblicherweise Automatisierungsgeräte (z.B. sogenannte Feldgeräte), die in der Nähe von Primärkomponenten der entsprechenden Anlage, also z.B. des elektrischen Energieversorgungsnetzes, angeordnet sind. Solche Primärkomponenten können im Falle eines elektrischen Energieversorgungsnetzes beispielsweise elektrische Kabel und Leitungen, Transformatoren, Generatoren, Motoren oder Umrichter sein. Bei den Geräten kann es sich beispielsweise um sogenannte elektrische Schutzgeräte oder Feldleitgeräte handeln, die in Unterstationen elektrischer Energieversorgungsnetze installiert sind. In der Fachsprache werden solche Geräte oft auch als sogenannte "IEDs" ("Intelligent Electronic Devices") bezeichnet. Die Geräte sind hierbei mit dem Kommunikationsnetz verbunden und tauschen darüber Datentelegramme aus, die als Nutzdaten beispielsweise Steuerbefehle, Meldungen über Ereignisse (z. B. Schwellenwertverletzungen), Messwerte oder Statusmeldungen umfassen.

Häufig stellen Automatisierungsanlagen sicherheitskritische Systeme dar, die gegen unbefugte Eingriffe und Manipulationen zu schützen sind. Daher dürfen in den Kommunikationsnetzen solcher Automatisierungsanlagen üblicherweise nur solche Geräte miteinander Daten austauschen, die zuvor eine Registrierung durchlaufen haben, bei der einerseits ihre Identität festgestellt wird und andererseits ihre Befugnis, in dem Kommunikationsnetz Daten auszutauschen von einer übergeordneten Stelle festgestellt wird. Dieser Vorgang wird auch als "Authentifizierung" bezeichnet.

Es sind verschiedene Verfahren bekannt, wie eine Authentifizierung eines Gerätes in einem Kommunikationsnetz erfolgen kann. So definiert der Standard IEEE 802.1X ein Authentifizierungsprotokoll, mit dem sichergestellt werden kann, dass nur autorisierte Geräte auf ein Kommunikationsnetz (z.B. auf ein LAN) über freigeschaltete Kommunikationsports ("access ports") von Zugangspunkten, wie z.B. Ethernet Bridges, zugreifen können. Diese portbasierte Authentifizierung nach IEEE 802.1X wird häufig in Kommunikationsnetzen der Informationstechnologie (IT) eingesetzt. Auch im Rahmen der Betriebstechnologie ("operation technology" - OT) findet ein Einsatz statt, das Verfahren stößt hier aber aufgrund spezifischer Besonderheiten bisweilen an seine Grenzen, wie später im Detail erläutert wird.

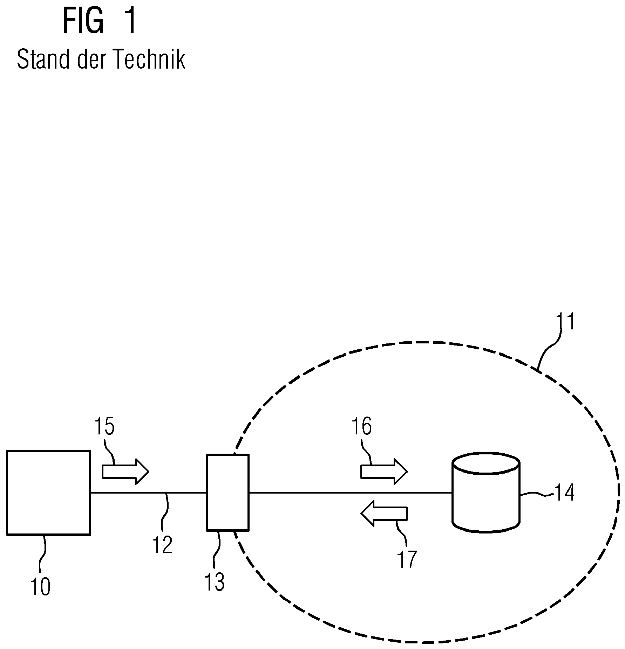

Figur 1 zeigt eine an die IEEE 802.1X-2020, Abschnitt 7.1, angelehnte Darstellung zur Erläuterung der Authentifizierung eines Gerätes 10 zum Datenaustausch in einem Kommunikationsnetz 11. Das Gerät 10 ("host") ist hierbei über eine Punkt-zu-Punkt Verbindung 12 mit einem Zugangspunkt 13 ("access point") des Kommunikationsnetzes 11 verbunden. Bei dem Gerät 10 kann es sich zum Beispiel um einen Personalcomputer, ein kommunikationsfähiges Endgerät oder ein Automatisierungsgerät einer Automatisierungsanlage handeln. Der Zugangspunkt 13 kann beispielsweise durch eine Ethernet Bridge gebildet sein. Nachdem das Gerät 10 mit dem Zugangspunkt 13 verbunden und eingeschaltet worden ist, sendet das Gerät in der Rolle des "Supplicants" eine seine Authentifizierungsinformation enthaltende Nachricht 15 an den Zugangspunkt 13. Dies kann mittels des sogenannten "Extensible Authentication Protocol over LAN" (EAPOL) erfolgen. Der Zugangspunkt 13 nimmt in diesem Fall die Rolle des "Authenticators" an und leitet die Authentifizierungsinformation mit einer weiteren Nachricht 16 an einen Authentifizierungsserver 14 weiter, bei dem es sich z.B. um einen "Remote Authentication Dial-In User Service" (RADIUS) Server handeln kann. Die Weiterleitung der Authentifizierungsinformation kann beispielsweise mit einer sogenannten "Extensible Authentication Protocol" (EAP) Nachricht erfolgen, die in Nachrichten eines AAA-Protokolls (Authentifizierung, Autorisierung und Accounting) eingebettet ist, beispielsweise des RADIUS-Protokolls.

Der Authentifizierungsserver 14 prüft die Validität der empfangenen Authentifizierungsinformation. Dies kann beispielsweise dadurch erfolgen, dass geprüft wird, ob die empfangene Authentifizierungsinformation mit einer Referenz-Authentifizierungsinformation übereinstimmt, die beispielsweise in einer dem Authentifizierungsserver zugeordneten Datenbank enthalten sein kann. Eine Alternative besteht darin, zu prüfen, ob ein mit der Authentifizierungsinformation verknüpftes Zertifikat vertrauenswürdig ist. In Abhängigkeit vom Ergebnis der Prüfung antwortet der Authentifizierungsserver mit einer entsprechenden Nachricht 17 an den Zugangspunkt 13, die den Zugangspunkt dazu veranlasst, das Gerät entweder zum Kommunikationsnetz zuzulassen (erfolgreiche Authentifizierung) oder abzulehnen (fehlgeschlagene Authentifizierung). Der Zugangspunkt öffnet nach erfolgreicher Authentifizierung seinen Zugangs-Port und das nunmehr authentifizierte Gerät beginnt den Datenaustausch mit anderen Geräten im Kommunikationsnetz.

Auf diese Weise kann sichergestellt werden, dass sich nur autorisierte Geräte mit dem Kommunikationsnetz verbinden dürfen und das Kommunikationsnetz somit gegen Manipulation durch Dritte und andere Sicherheitsangriffe, z.B. "eaves dropping", "spoofing" oder "denial-of-service" geschützt wird.

Neben der Absicherung gegen Angriffe erfordern viele automatisiert betriebene Anlagen auch eine hohe Ausfallsicherheit. Diese Anforderung besitzt starke Auswirkungen auf das Kommunikationsnetz, mit dem die Geräte einer solchen Anlage miteinander verbunden sind. Daher werden solche Kommunikationsnetze üblicherweise redundant ausgelegt, d.h., dass auch bei dem Ausfall einer Kommunikationsverbindung innerhalb des Kommunikationsnetzes die zuverlässige Übertragung von Datentelegrammen zwischen den einzelnen Geräten gewährleistet ist. Der Begriff "Kommunikationsverbindung" soll im Folgenden die komplette Übertragungsstrecke zwischen den jeweiligen Geräten umfassen, also sowohl ein vorhandenes (drahtgebundenes oder drahtloses) Übertragungsmedium als auch dessen physikalische, kommunikationstechnische und logische Anbindung zu dem jeweiligen Gerät (z.B. Schnittstellen, Kommunikationseinrichtungen, Protokollstacks) umfassen.

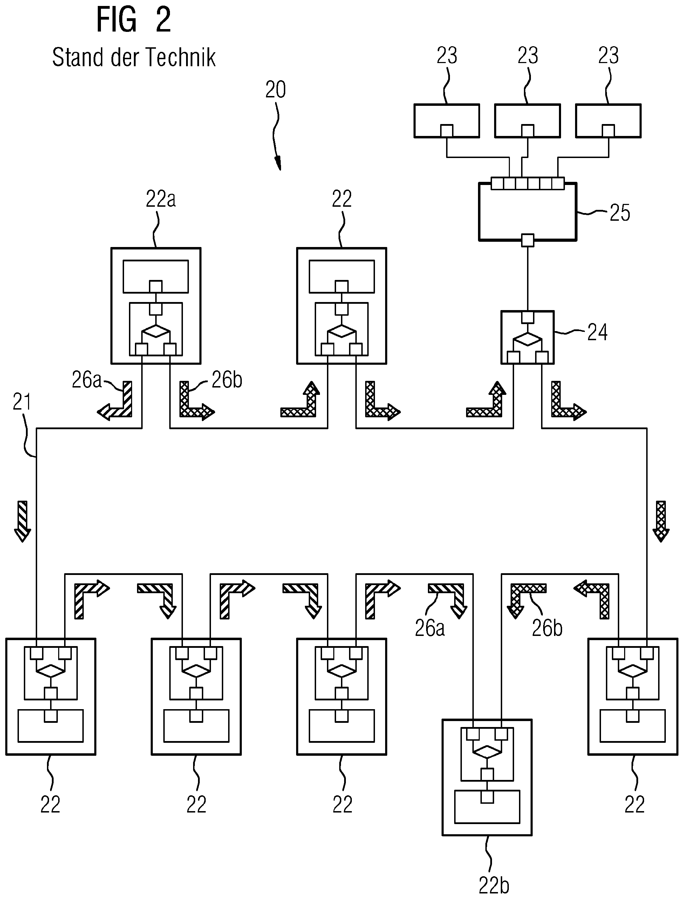

Eine Möglichkeit, ein Kommunikationsnetz ausfallsicher auszugestalten und dabei auch im Falle einer Störung einer Kommunikationsverbindung einen weitgehend nahtlosen Weiterbetrieb der Automatisierungsanlage zu gewährleisten, ist im Standard IEC 62439-3 als sogenanntes "High-availability Seamless Redundancy" Protokoll (HSR) beschrieben. Ein Beispiel eines gemäß HSR aufgebauten Kommunikationsnetzes 20 ist in Figur 2 gezeigt.

Das HSR-Kommunikationsnetz 20 der Figur 2 ist in einer Ringtopologie aufgebaut, umfasst somit mindestens einen Kommunikationsring 21, wobei jedes Gerät 22 üblicherweise als sogenannter "Double Attached Node HSR" (DANH) mit zwei Kommunikationsports in den Kommunikationsring 21 eingebunden ist. Dabei sind die Geräte 22 jeweils direkt mit ihren jeweiligen Nachbargeräten verbunden. Geräte mit nur einem Kommunikationsport ("Single Attached Node" - SAN) 23 können über eine Redundanzeinheit ("RedBox") 24 (und ggf. eine Bridge 25) an den Kommunikationsring 21 gekoppelt werden. Ein Sendegerät 22a sendet zwei Datentelegramme (bzw. zwei Duplikate einer Nachricht) 26a, 26b in beide Richtungen des Kommunikationsrings 21 aus. Um als redundante HSR-Nachricht identifiziert werden zu können, werden den beiden Nachrichten 26a, 26b spezielle Header in Form eines sogenannten "HSR tags" vorangestellt. Die benachbarten Geräte 22 empfangen die Nachrichten 26a, 26b mit ihrem einen Kommunikationsport und leiten sie ggf. mit ihrem anderen Kommunikationsport weiter. Dabei werden Unicast-Nachrichten, die an das jeweilige Gerät 22 adressiert sind, bearbeitet und nicht weitergeleitet, während Unicast-Nachrichten, die nicht an das jeweilige Gerät adressiert sind, weitergeleitet werden. Darüber hinaus werden Broadcast-Nachrichten und Multicast-Nachrichten bearbeitet und zusätzlich weitergeleitet. Nachrichten, die nach einem kompletten Durchlauf des Kommunikationsrings 21 wieder beim Sender eintreffen, werden verworfen.

Im Fall eines fehlerfreien Betriebs werden die duplizierten Nachrichten 26a, 26b in einem Empfänger-Gerät 22b über jeweils einen Kommunikationsport empfangen. Dabei leitet das Empfänger-Gerät 22b das zuerst eintreffende Datentelegramm 26a zur Verarbeitung an eine Applikationsebene weiter. Das später eintreffende Datentelegramm 26b wird als Duplikat verworfen. Duplikate können dabei an einer eindeutigen Sequenznummer im HSR tag erkannt werden.

HSR-Kommunikationsnetze sind im Bereich der industriellen Kommunikation und in Unterstationen von Energieversorgungsnetzen weit verbreitet. Hierbei wird eine nahtlose Redundanz dadurch erreicht, dass das Kommunikationsnetz 20 als geschlossene Ringstruktur aufgebaut ist, so dass zwischen allen angeschlossenen Geräten 22 immer zwei voneinander unabhängige Kommunikationswege existieren und auch bei einer Störung eines der beiden Kommunikationswege die Übertragung des Datentelegramms über den jeweiligen anderen Übertragungsweg sichergestellt ist. Im Fall einer fehlerhaften Verbindung oder eines fehlerhaften Gerätes wird zwar der Kommunikationsring 21 unterbrochen, alle übrigen Geräte können jedoch weiterhin über die verbliebene Kettenstruktur miteinander kommunizieren.

Die Verwendung eines gemäß dem HSR-Standard aufgebauten Kommunikationsnetzes ist beispielsweise aus der Europäischen Patentanmeldung EP 2148473 A1 bekannt.

Die oben beschriebene Vorgehensweise zur Authentifizierung eines Gerätes ist jedoch nicht für redundante Kommunikationsnetze ausgelegt.

Der Fachmann stellt sich daher die Aufgabe, eine Authentifizierung eines Gerätes auch in einem redundant ausgelegten Kommunikationsnetz, insbesondere einem nach IEC 62439-3 HSR ausgelegten Kommunikationsnetz, durchführen zu können.

Zur Lösung dieser Aufgabe wird ein Verfahren der eingangs beschriebenen Art erfindungsgemäß dahingehend weitergebildet, dass das Kommunikationsnetz einen Kommunikationsring aufweist, der neben dem Gerät zumindest ein erstes Nachbargerät und ein zweites Nachbargerät aufweist, wobei das Gerät zur redundanten Datenübertragung über einen ersten Kommunikationsport mit dem ersten Nachbargerät und über einen zweiten Kommunikationsport mit dem zweiten Nachbargerät verbunden ist. Das Gerät sendet zum Start der Authentifizierung über den ersten Kommunikationsport eine erste die Authentifizierungsinformation enthaltende Authentifizierungsanfrage an das erste Nachbargerät und über den zweiten Kommunikationsport eine zweite die Authentifizierungsinformation enthaltende Authentifizierungsanfrage an das zweite Nachbargerät.

Dabei kann die Authentifizierungsanfrage aus einer oder mehrere Nachrichten bestehen. Entsprechend können als Reaktion auf die Authentifizierungsanfrage vom Authentifizierungsserver gesendete Authentifizierungsantworten aus einer oder mehreren Nachrichten bestehen. Es kann somit ein Austausch mehrerer Nachrichten zwischen dem als Authenticator fungierenden Gerät und dem Authentifizierungsserver stattfinden.

Als Authentifizierungsinformation kann beispielsweise eine Kombination aus Username und Passwort, eine Identifizierung des Gerätes, z.B. ein Secure Device Identifier (DevID), und/oder ein Gerätezertifikat verwendet werden. Das erste Nachbargerät und das zweite Nachbargerät duplizieren die jeweilige empfangene Authentifizierungsinformation und senden sie in beiden Übertragungsrichtungen über den Kommunikationsring an einen mit dem Kommunikationsring verbundenen Authentifizierungsserver. Der Authentifizierungsserver führt anhand der jeweiligen empfangenen Authentifizierungsinformation jeweils eine Prüfung der Authentizität des Geräts durch und lässt als Ergebnis der Prüfung das Gerät als Teilnehmer in dem Kommunikationsnetz zu oder lehnt es ab.

Erfindungsgemäß findet somit eine Authentifizierung der Kommunikationsports des Gerätes gegenüber dem jeweiligen Nachbargerät statt. Die Geräte können dabei im Sinne des IEEE 802.1X Standards sowohl die Rolle des Supplicants als auch die Rolle des Authenticators einnehmen, je nachdem, ob sie das zu authentifizierende Gerät oder eines der Nachbargeräte darstellen. Damit hat das erfindungsgemäße Verfahren den Vorteil, dass außer beim Gerät selbst keinerlei Änderungen des HSR-Kommunikationsnetzes vorgenommen werden müssen, um eine Authentifizierung durchführen zu können. Insbesondere müssen auch keine proprietären Änderungen bezüglich des HSR-Standards eingeführt werden, wodurch die Interoperabilität mit anderen Geräten erschwert werden würde.

Konkret kann vorgesehen sein, dass das Kommunikationsnetz zur redundanten Datenübertragung gemäß dem Standard IEC 62439-3 HSR ausgebildet ist. Damit ist bei dem erfindungsgemäßen Verfahren insbesondere eine volle Kompatibilität zu den Standards IEEE 802.1X und IEC 62439-3 HSR gegeben.

Eine weitere vorteilhafte Ausführungsform des erfindungsgemäßen Verfahrens sieht vor, dass das Gerät und die beiden Nachbargeräte eine gegenseitige Authentifizierung durchführen. Vorzugsweise kann diese gegenseitige Authentifizierung gleichzeitig oder im Wesentlichen gleichzeitig ausgeführt werden.

Bei dieser Ausführungsform authentifizieren sich das startende Gerät und jedes seiner beiden Nachbargeräte gegenseitig. Im Sinne des Standards IEEE 802.1X übernimmt damit jedes der Geräte gleichzeitig die Rollen "Supplicant" und "Authenticator". Der Authentifizierungsserver empfängt in dieser Ausführungsform somit insgesamt vier Authentifizierungsanfragen:
Das Gerät sendet in der Rolle des Supplicants eine EAPOL-Nachricht an das erste Nachbargerät, das diesbezüglich die Rolle des Authenticators einnimmt. Dieses sendet daraufhin in beide Richtungen des Kommunikationsrings je eine EAP/AAA Nachricht zum Authentifizierungsserver, der die erste der beiden Nachrichten verarbeitet. Zudem sendet das Gerät in der Rolle des Supplicants eine EAPOL-Nachricht an das zweite Nachbargerät, das diesbezüglich ebenfalls die Rolle des Authenticators einnimmt. Dieses sendet daraufhin in beide Richtungen des Kommunikationsrings je eine EAP/AAA Nachricht zum Authentifizierungsserver, der die erste der beiden Nachrichten verarbeitet.

Außerdem sendet das erste Nachbargerät in der Rolle des Supplicants eine EAPOL-Nachricht an das Gerät, das diesbezüglich die Rolle des Authenticators einnimmt und je eine EAP/AAA Nachricht in beide Richtungen des Kommunikationsrings sendet. Der Authentifizierungsserver empfängt auch diese Nachrichten und verarbeitet die zuerst eintreffende der beiden Nachrichten.

Schließlich sendet auch das zweite Nachbargerät in der Rolle des Supplicants eine EAPOL-Nachricht an das Gerät, das auch diesbezüglich die Rolle des Authenticators einnimmt und je eine EAP/AAA Nachricht in beide Richtungen des Kommunikationsrings sendet. Der Authentifizierungsserver empfängt auch diese Nachrichten und verarbeitet die zuerst eintreffende der beiden Nachrichten.

Jede der EAP/AAA-Nachrichten wird somit dupliziert über den HSR-Ring gesendet. Die beschriebene Authentifizierungs-Kommunikation läuft zeitlich parallel, quasi gleichzeitig und unabhängig voneinander ab.

Gemäß einer weiteren vorteilhaften Ausführungsform des erfindungsgemäßen Verfahrens kann vorgesehen sein, dass zur Prüfung der Authentizität des Geräts die empfangene Authentifizierungsinformation mit einer Referenz-Authentifizierungsinformation verglichen wird und/oder ein in der Authentifizierungsinformation enthaltenes Zertifikat hinsichtlich seiner Vertrauenswürdigkeit geprüft wird und bei Übereinstimmung das Gerät in dem Kommunikationsnetz zugelassen wird.

Die Referenz-Authentifizierungsinformation kann hierbei beispielsweise bei einer Systemkonfiguration in einer Datenbank des Authentifizierungsservers hinterlegt worden sein. Hinsichtlich des Zertifikats kann beispielsweise geprüft werden, ob der Authentifizierungsserver diejenige Stelle, die das Zertifikat ausgestellt hat, als vertrauenswürdig ansieht.

Eine weitere vorteilhafte Ausführungsform des erfindungsgemäßen Verfahrens sieht vor, dass als Reaktion auf die Prüfung eine Authentifizierungsantwort an das erste Nachbargerät und das zweite Nachbargerät gesendet wird, die angibt, ob das jeweilige Nachbargerät das Gerät zur Kommunikation in dem Kommunikationsnetz zulassen darf oder nicht. Wie oben erwähnt kann die Authentifizierungsantwort aus einer oder mehreren Nachrichten bestehen.

Gemäß einer weiteren vorteilhaften Ausführungsform des erfindungsgemäßen Verfahrens kann vorgesehen sein, dass der Authentifizierungsserver über ein Redundanzvorschaltgerät mit dem Kommunikationsring verbunden ist, wobei das Redundanzvorschaltgerät über zwei Kommunikationsports mit dem Kommunikationsring und über einen weiteren Kommunikationsport mit dem Authentifizierungsserver verbunden ist.

Das Redundanzvorschaltgerät stellt somit im Sinne des Standards IEC 62439-3 HSR eine sogenannte RedBox dar.

Der Authentifizierungsserver kann hierbei direkt oder über eine Ethernet Bridge oder ein lokales Kommunikationsnetz (wie z.B. ein Substation-LAN) oder aber über eine Kombination aus mehreren LANs und Weitverkehrsnetzen (WANs) mit dem Redundanzvorschaltgerät verbunden sein.

Alternativ kann vorgesehen sein, dass der Authentifizierungsserver über zwei Kommunikationsports mit dem Kommunikationsring verbunden ist. Der Authentifizierungsserver ist in diesem Fall als DANH im Sinne des Standards IEC 62439-3 HSR in den Kommunikationsring eingebunden.

Nach entsprechender Prüfung sendet der Authentifizierungsserver in beiden Ausführungsformen in jeder Übertragungsrichtung des Kommunikationsrings eine entsprechende Nachricht an das jeweiligen Nachbargerät zurück.

Konkret versendet dabei der Authentifizierungsserver in der DANH-Rolle die Authentifizierungsantwort über seine im Kommunikationsring eingebundenen Kommunikationsports direkt in jeder Übertragungsrichtung. Im Falle einer Ankopplung über das Redundanzvorschaltgerät sendet der Authentifizierungsserver zunächst nur eine Authentifizierungsantwort und das Redundanzvorschaltgerät übernimmt die Duplizierung und das Versenden in jeder Übertragungsrichtung.

Gemäß einer weiteren vorteilhaften Ausführungsform des erfindungsgemäßen Verfahrens kann vorgesehen, dass im Falle einer Unterbrechung des Kommunikationsrings die beiden an die Stelle der Unterbrechung angrenzenden Geräte nach Wiederherstellung der Verbindung jeweils eine erneute Authentifizierung durchführen.

Auf diese Weise kann sichergestellt werden, dass auch nach einer Unterbrechung des Kommunikationsrings nur vertrauenswürdige Geräte in dem Kommunikationsnetz miteinander kommunizieren dürfen. Bei einer unterbrochenen Kommunikationsverbindung zwischen zwei Geräten wird die erneute Authentifizierung auf diejenigen Kommunikationsports beschränkt, zwischen denen die Unterbrechung stattgefunden hat. Hierbei authentifizieren sich die beiden Geräte gegenseitig, die durch den unterbrochenen und nun wiederhergestellten Link miteinander verbunden sind. Bei einer Unterbrechung aufgrund eines ausgefallenen Gerätes findet die Authentifizierung für das Gerät (oder ein Ersatzgerät) für beide Kommunikationsports des ausgefallenen Gerätes statt. Das vorher ausgefallene und nun wieder startende Gerät (oder ein Ersatzgerät) authentifiziert sich konkret gegenseitig mit jedem seiner zwei Nachbargeräte.

Eine weitere vorteilhafte Ausführungsform des erfindungsgemäßen Verfahrens sieht vor, dass das Gerät eine mit dem ersten Kommunikationsport über eine erste Portzugriffssteuereinheit verbundene erste Authentifizierungseinrichtung und eine mit dem zweiten Kommunikationsport über eine zweite Portzugriffssteuereinheit verbundene zweite Authentifizierungseinrichtung aufweist, wobei die jeweilige Authentifizierungseinrichtung die jeweilige Authentifizierungsanfrage erzeugt und über den jeweiligen Kommunikationsport aussendet.

Auf diese Weise kann mit einfachen Mitteln eine für jede der beiden Übertragungsrichtungen separate Authentifizierung angestoßen werden.

In diesem Zusammenhang kann zudem vorgesehen sein, dass die erste Portzugriffssteuereinheit und die zweite Portzugriffssteuereinheit mit einer Redundanzeinheit des Geräts verbunden sind und dazu eingerichtet sind, während der Authentifizierung des Geräts ausschließlich zur Authentifizierung des Gerätes dienende Nachrichten zwischen der Redundanzeinheit und den Kommunikationsports weiterzuleiten und die Weiterleitung anderer Nachrichten zu blockieren und erst nach erfolgreicher Authentifizierung des Geräts die anderen Nachrichten zwischen der Redundanzeinheit und den Kommunikationsports weiterzuleiten.

Die jeweilige Portzugriffssteuereinheit sorgt folglich dafür, dass bis zur erfolgreich abgeschlossenen Authentifizierung des Geräts keine Datenkommunikation des Gerätes mit anderen Geräten im Kommunikationsnetz stattfinden kann. Lediglich eine Weiterleitung von Nachrichten zum Zwecke der Authentifizierung ist erlaubt. Nach erfolgreicher Authentifizierung werden hingegen die entsprechenden redundanten Datentelegramme mit dem Kommunikationsnetz ausgetauscht.

Hinsichtlich der Redundanzeinheit kann zudem vorgesehen sein, dass die Redundanzeinheit nach erfolgreicher Authentifizierung des Geräts von dem Gerät zu versendende Telegramme dupliziert und über beide Kommunikationsports versendet und von dem Gerät empfangene Telegramme daraufhin überprüft, ob ein identisches Telegramm bereits empfangen worden ist, und das empfangene Telegramm abhängig von der Prüfung an eine Applikationsebene des Geräts weiterleitet oder verwirft.

Damit führt die Redundanzeinheit nach erfolgreicher Authentifizierung des Gerätes die Funktionalität zum redundanten Datenaustausch durch.

Der beschriebene Aufbau gilt auch für ein Redundanzvorschaltgerät, falls das Gerät über ein solches mit dem Kommunikationsring verbunden ist.

Gemäß einer weiteren vorteilhaften Ausführungsform des erfindungsgemäßen Verfahrens kann vorgesehen sein, dass bei einem über einen einzelnen Kommunikationsport an ein Redundanzvorschaltgerät angeschlossenen Gerät, das Gerät die Authentifizierungsanfrage erzeugt und über den einzelnen Kommunikationsport aussendet und das Redundanzvorschaltgerät die Authentifizierungsinformation des Gerätes über einen ersten Kommunikationsport an das erste Nachbargerät sendet und über einen zweiten Kommunikationsport an das zweite Nachbargerät sendet.

Bei dieser Ausführungsform ist das Gerät selbst nicht redundant an das Kommunikationsnetz angeschlossen, da es nur einen Kommunikationsport aufweist (im Sinne des Standards IEC 62439-3 HSR ein sogenannter "Single Attached Node" - SAN). In diesem Fall steht das Gerät mit einem Redundanzvorschaltgerät, z.B. einer sogenannten "RedBox", in Verbindung, die über zwei Kommunikationsports an die beiden Nachbargeräte in dem Kommunikationsring angeschlossen ist. Die Authentifizierung findet in diesem Fall z.B. zwischen dem Redundanzvorschaltgerät und dem zu authentifizierenden Gerät statt. Zum Anschließen weiterer Geräte an das Redundanzvorschaltgerät kann dieses mit dem Gerät über eine Ethernet-Bridge verbunden sein.

Die oben genannte Aufgabe wird auch durch ein kommunikationsfähiges Gerät zum Anschluss an ein Kommunikationsnetz einer Automatisierungsanlage gelöst, wobei das Kommunikationsnetz einen Kommunikationsring aufweist, wobei das Gerät zur redundanten Datenübertragung einen ersten Kommunikationsport zur Verbindung mit einem ersten Nachbargerät und einen zweiten Kommunikationsport zur Verbindung mit einem zweiten Nachbargerät aufweist.

Erfindungsgemäß ist vorgesehen, dass das Gerät zur Durchführung eines Verfahrens gemäß einem der vorigen Ansprüche 1 - 10 ausgebildet ist.

Hinsichtlich des erfindungsgemäßen Gerätes gelten alle zu dem erfindungsgemäßen Verfahren voranstehend und nachfolgend gemachten Ausführungen und umgekehrt in entsprechender Weise, insbesondere ist das erfindungsgemäße Gerät zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Gerätes wird auf die zu dem erfindungsgemäßen Verfahren beschriebenen Vorteile verwiesen.

Eine vorteilhafte Ausführungsform des erfindungsgemäßen Gerätes sieht vor, dass das Gerät eine mit dem ersten Kommunikationsport über eine erste Portzugriffssteuereinheit verbundene erste Authentifizierungseinrichtung aufweist, die dazu eingerichtet ist, zum Start einer Authentifizierung des Geräts eine erste eine Authentifizierungsinformation enthaltende Authentifizierungsanfrage zu erzeugen. Das Gerät weist eine mit dem zweiten Kommunikationsport über eine zweite Portzugriffssteuereinheit verbundene zweite Authentifizierungseinrichtung auf, die dazu eingerichtet ist, zum Start einer Authentifizierung des Geräts eine zweite die Authentifizierungsinformation enthaltende Authentifizierungsanfrage zu erzeugen. Das Gerät ist dazu eingerichtet, über den ersten Kommunikationsport die erste Authentifizierungsanfrage auszusenden und über den zweiten Kommunikationsport die zweite Authentifizierungsanfrage auszusenden.

Außerdem kann in diesem Zusammenhang vorgesehen sein, dass die erste Portzugriffssteuereinheit und die zweite Portzugriffssteuereinheit mit einer Redundanzeinheit des Geräts verbunden und dazu eingerichtet sind, während der Authentifizierung des Geräts ausschließlich zur Authentifizierung des Gerätes dienende Nachrichten zwischen der Redundanzeinheit und den Kommunikationsports weiterzuleiten und die Weiterleitung anderer Nachrichten zu blockieren und erst nach erfolgreicher Authentifizierung des Geräts die anderen Nachrichten zwischen der Redundanzeinheit und den Kommunikationsports weiterzuleiten.

Außerdem kann vorgesehen sein, dass die Redundanzeinheit dazu eingerichtet ist, nach erfolgreicher Authentifizierung des Geräts von dem Gerät zu versendende Telegramme zu duplizieren und über beide Kommunikationsports zu versenden und von dem Gerät empfangene Telegramme daraufhin zu überprüfen, ob ein identisches Telegramm bereits empfangen worden ist, und das empfangene Telegramm abhängig von der Prüfung an eine Applikationsebene des Geräts weiterzuleiten oder zu verwerfen.

Die oben genannte Aufgabe wird auch durch einen Authentifizierungsserver gelöst, der mittelbar oder unmittelbar mit einem Kommunikationsring eines Kommunikationsnetzes verbunden und dazu eingerichtet ist, mit einem Gerät nach einem der Ansprüche 13-16 ein Verfahren gemäß einem der Ansprüche 1-12 durchzuführen.

Schließlich wird die oben genannte Aufgabe auch gelöst durch ein Kommunikationsnetz einer Automatisierungsanlage mit einem Kommunikationsring, einem Authentifizierungsserver und einem zu authentifizierenden Gerät. Erfindungsgemäß ist vorgesehen, dass das Kommunikationsnetz dazu ausgebildet ist, zur Authentifizierung des Geräts ein Verfahren gemäß einem der Ansprüche 1 bis 11 durchzuführen. Hierzu wirken die Komponenten des Kommunikationsnetzes in entsprechender Weise zusammen.

In diesem Zusammenhang kann zudem vorgesehen sein, dass Gerät entsprechend einem der Ansprüche 12 bis 15 ausgebildet ist und über seinen ersten Kommunikationsport mit einem ersten Nachbargerät des Kommunikationsrings und mit seinem zweiten Kommunikationsport mit einem zweiten Nachbargerät des Kommunikationsrings in Verbindung steht.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine Darstellung eines zu authentifizierenden Gerätes in einem Kommunikationsnetz gemäß dem Stand der Technik;
- Figur 2: ein Beispiel eines gemäß IEC 62439-3 HSR redundant aufgebauten Kommunikationsnetzes gemäß dem Stand der Technik;
- Figur 3: eine beispielhafte Darstellung eines redundant an ein Kommunikationsnetz angeschlossenen zu authentifizierenden Gerätes;
- Figur 4: eine beispielhafte Darstellung des Kommunikationsnetzes der Figur 3 nach einer Unterbrechung;
- Figur 5: eine schematische Darstellung des Aufbaus eines zu authentifizierenden Gerätes;
- Figur 6: eine beispielhafte Darstellung von einem Kommunikationsnetz mit einem mittels eines Redundanzvorschaltgeräts angeschlossenen zu authentifizierenden Gerät; und
- Figur 7: eine schematische Darstellung des Aufbaus eines Redundanzvorschaltgerätes.

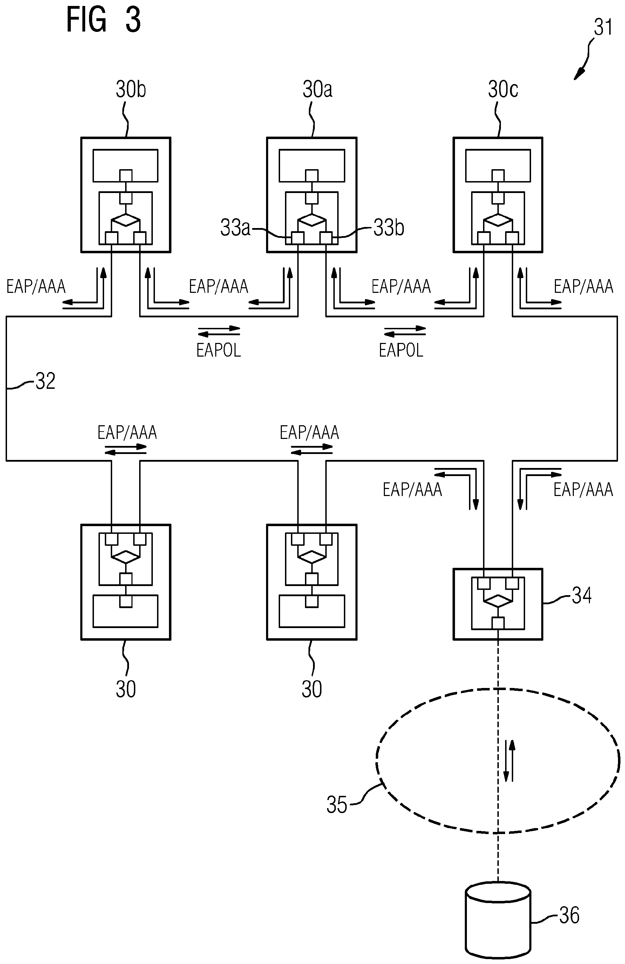

Gemäß Figur 3 soll ein kommunikationsfähiges Gerät 30a als Teilnehmer in einem Kommunikationsnetz 31 zugelassen werden und führt dazu eine Authentifizierungsprozedur durch. Das Kommunikationsnetz 31 ist zur redundanten Datenübertragung, z.B. entsprechend dem Standard IEC 62439-3 HSR, ausgebildet und umfasst hierfür einen Kommunikationsring 32, in den neben dem Gerät 30a auch weitere Geräte 30, insbesondere Nachbargeräte 30b und 30c, die in dem Kommunikationsring 32 direkt benachbart zum Gerät 30a liegen, sowie ein Redundanzvorschaltgerät 34 ("HSR RedBox") angeordnet sind. An das Redundanzvorschaltgerät 34 ist - ggf. über ein separates LAN oder ggf auch WAN 35 - ein Authentifizierungsserver 36 angeschlossen.

Zur Datenübertragung ist das Gerät 30a in dem Kommunikationsring 32 über einen ersten Kommunikationsport 33a mit einem ersten Nachbargerät 30b und über einen zweiten Kommunikationsport 33b mit einem zweiten Nachbargerät 30c verbunden. Zwischen dem Gerät 30a und dem jeweiligen Nachbargerät 30b, 30c bestehen Punkt-zu-Punkt Verbindungen. Im Sinne des Standards IEC 62439-3 HSR stellen die Geräte 30, 30a, 30b, 30c einen Double Attached Node (DANH) dar.

Die Geräte 30, 30a, die Nachbargeräte 30b, 30c und das Kommunikationsnetz 31 mit dem Kommunikationsring 32 können zum Beispiel zu einer Automatisierungsanlage eines technischen Systems (z.B. eines Energieversorgungsnetzes, einer Fertigungsanlage oder einer Prozessanlage) gehören. In diesem Fall kann das Gerät beispielsweise ein Automatisierungsgerät zum Regeln, Steuern, Überwachen und/oder Schützen des technischen Systems sein.

Prinzipiell können mehrere oder sogar alle Geräte 30, 30a-c des Kommunikationsnetzes 31 eine Authentifizierung durchführen. Dies kann nacheinander oder gleichzeitig geschehen. Die zu diesem Zweck auszutauschenden Nachrichten, z.B. EAP/AAA Nachrichten müssen dabei andere Geräte passieren können, unabhängig davon, ob diese bereits erfolgreich authentifiziert wurden oder nicht. Nachfolgend sei der Einfachheit halber angenommen, dass lediglich das Gerät 30a authentifiziert werden soll. Zunächst ist jegliche Datenkommunikation mit diesem Gerät 30a, die nicht der Authentifizierung dient, nicht zugelassen.

Zur Authentifizierung führt das Gerät 30a den Authentifizierungsvorgang separat für jeden seiner Kommunikationsports 33a, 33b und beide Richtungen des Kommunikationsrings 32 durch. Im Sinne des Standards IEEE 802.1X nimmt das Gerät 30a hierfür die Rolle des "Supplicants" ein, während das jeweilige Nachbargerät 30b, 30c die Rolle des "Authenticators" einnimmt. Generell sind alle Geräte 30, 30a-c - je nachdem, ob sie selbst authentifiziert werden oder an der Authentifizierung eines benachbarten Gerätes teilnehmen - dazu in der Lage, sowohl die Rolle des Supplicants als auch des Authenticators einzunehmen. Konkret kann dies derart ausgestaltet sein, dass sich das Gerät 30a und sein erstes Nachbargerät 30b einerseits sowie das Gerät 30a und sein zweites Nachbargerät 30c anderseits jeweils gegenseitig authentifizieren. Dies erfolgt parallel und weitgehend gleichzeitig. Alle drei Geräte sind dann über ihre Kommunikationsports sowohl Supplicant als auch Authenticator, je nachdem welche EAPOL-Nachrichten bzw. EAP/AAA-Nachrichten sie gerade versenden oder empfangen.

Diesbezügliche Beschriftungen ("EAPOL", "EAP/AAA") in den Figuren sind als Beispiele lediglich erläuternd und nicht einschränkend zu verstehen.

Nachfolgend wird die Authentifizierung aus Sicht des Gerätes 30a dargestellt. Die Erläuterungen sind auf die übrigen Geräte 30 sowie 30b 30c in entsprechender Weise übertragbar. Zum Start der Authentifizierung sendet das Gerät 30a über jeden seiner Kommunikationsports 33a, 33b eine jeweilige Authentifizierungsanfrage an das jeweilige Nachbargerät 30b, 30c. Die Authentifizierungsanfragen beinhalten eine Authentifizierungsinformation des Gerätes 30a und können beispielswiese gemäß dem EAPOL Protokoll ausgebildet sein. Solche Authentifizierungsanfragen werden nicht dupliziert, sondern unabhängig über jeden der Kommunikationsports 33a, 33b versendet bzw. empfangen. Sie werden lediglich lokal zwischen den beiden benachbarten Geräten (z.B. 30a, 30b) ausgetauscht und vom Nachbargerät 30b, 30c nicht über den jeweils anderen Kommunikationsport entlang des Kommunikationsrings 32 an andere Geräte weitergeleitet. Entsprechend weisen die Authentifizierungsanfragen auch keinen Redundanz-Header ("HSR tag") auf.

Die Nachbargeräte 30b, 30c, in der Rolle des Authenticators, (und auch das Gerät 30a selbst) leiten die Authentifizierungsinformation an den mit dem Kommunikationsring 32 verbundenen Authentifizierungsserver 36 weiter. Dafür können EAP/AAA Nachrichten verwendet werden. Diese Nachrichten werden vor ihrem Versenden dupliziert und jeweils über beide Kommunikationsports der Geräte 30a, 30b, 30c in beide Richtungen des Kommunikationsrings 32 ausgesendet. Somit passieren sie auch wieder das zu authentifizierende Gerät 30a, das sie in der entsprechenden Richtung weiterleitet. Entsprechend weisen diese Nachrichten den Redundanz-Header ("HSR tag") auf.

Hinsichtlich der zur Authentifizierung ausgetauschten Nachrichten ist anzumerken, dass EAPOL-Nachrichten nur auf der Verbindung zwischen den unmittelbaren Nachbarn ausgetauscht werden; hierbei wird nicht dupliziert und nicht weitergesendet. EAP/AAA-Nachrichten werden hingegen dupliziert und über den HSR-Ring (und darüber hinaus) gesendet und empfangen.

Diese Nachrichten können innerhalb des Kommunikationsrings 32 auch zu Geräten gelangen, die noch nicht authentifiziert sind und die deshalb - außer Nachrichten im Zusammenhang mit einer Authentifizierung - keine Datentelegramme mit anderen Geräten austauschen dürfen. Damit solche nicht authentifizierten Geräte Nachrichten im Zusammenhang mit der Authentifizierung weiterleiten können, kann eine spezielle Filterfunktion oder ein für solche Nachrichten reserviertes VLAN vorgesehen sein, wodurch ein Senden und Empfangen für bestimmte Nachrichten über an sich nicht authentifizierte Kommunikationsports erlaubt wird.

Auf dem Weg zum Authentifizierungsserver 36 gelangen die Nachrichten mit der Authentifizierungsinformation an das Redundanzvorschaltgerät 34. Dieses führt eine Duplikateerkennung durch und sendet jeweils nur das zuerst eintreffende Datentelegramm weiter in Richtung Authentifizierungsserver 36.

In der Ausführungsform der Figur 3 ist der Authentifizierungsserver 36 über das Redundanzvorschaltgerät 34 mit dem Kommunikationsring 32 verbunden. Dies hat den Vorteil, dass der Authentifizierungsserver 36 seinen Service auch für andere Kommunikationsnetze bereitstellen kann. Alternativ könnte der Authentifizierungsserver auch wie die Geräte 30, 30a-c mit zwei Kommunikationsports (entsprechend einem DANH) in den Kommunikationsring 32 eingebunden sein.

Der Authentifizierungsserver 36 empfängt die Authentifizierungsinformation und prüft damit, ob das Gerät 30a als Teilnehmer zu dem Kommunikationsnetz 31 zugelassen werden darf. Zu diesem Zweck hat der Authentifizierungsserver 36 Zugriff auf eine jeweilige für das Gerät 30a spezifische Referenz-Authentifizierungsinformation, mit der er die empfangene Authentifizierungsinformation vergleicht. Alternativ oder zusätzlich kann auch die Vertrauenswürdigkeit eines in der Authentifizierungsinformation enthaltenen Zertifikats geprüft werden.

Da wie oben dargestellt ein gegenseitiger Authentifizierungsvorgang zwischen dem Gerät 30a und den beiden Nachbargeräten 30b, 30c stattfinden kann, kann der Authentifizierungsserver 36 in einer entsprechenden Ausführungsform Authentisierungsanfragen bzgl. dieser drei Geräte 30a-c erhalten und in entsprechender Weise bearbeiten.

Damit wird die (EAP-basierte) Authentifizierung einerseits vom ersten Kommunikationsport 33a über das erste Nachbargerät 30b zum Authentifizierungsserver 36 und andererseits vom zweiten Kommunikationsport 33b über das zweite Nachbargerät 30c zum Authentifizierungsserver 36 durchgeführt. Insgesamt empfängt der Authentifizierungsserver 36 die Authentifizierungsinformation bezüglich des Gerätes 30a zweimal, nämlich je einmal für jeden Kommunikationsport 33a, 33b des Geräts 30a bzw. für jede Übertragungsrichtung im Kommunikationsring 32. Bei einer gegenseitigen Authentifizierung erhält er zusätzlich Authentifizierungsinformationen für diejenigen Kommunikationsports der Nachbargeräte 30b, 30c, die dem Gerät 30a zugewandt sind. Dabei wird die identische Authentifizierungsinformation über beide Übertragungsrichtungen des Kommunikationsrings 32 an den Authentifizierungsserver 36 gesendet, der daraufhin für jeden Kommunikationsport des Gerätes 30a identische Entscheidungen darüber trifft, ob das Gerät 30a als Teilnehmer zu dem Kommunikationsnetz 31 zugelassen werden darf.

Entsprechend der Entscheidung sendet der Authentifizierungsserver 36 Authentifizierungsantworten an die Nachbargeräte 30b, 30c, die bei erfolgreicher Authentifizierung ihre mit den Kommunikationsports 33a, 33b verbundenen Ports für den uneingeschränkten Datenaustausch öffnen. Bei einer gegenseitigen Authentifizierung werden die Nachbargeräte betreffende Authentifizierungsantworten auch an das Gerät 30a selbst geschickt; dieses öffnet dann auch seine Kommunikationsports für einen uneingeschränkten Datenaustausch mit den Nachbargeräten 30b, 30c.

Auf diese Weise führen das Gerät 30a sowie seine direkten Nachbargeräte 30b, 30c miteinander die Authentifizierung durch. Nach erfolgreicher Authentifizierung können die jeweiligen Geräte 30a-c über ihre miteinander verbundenen Kommunikationsports miteinander Datentelegramme austauschen. Auf diese Weise wird der Kommunikationsring 32 in diesem Abschnitt geschlossen. Durch gleichzeitige oder sukzessive Authentifizierung aller Geräte 30, 30a-c im Kommunikationsring 32 kann dieser für die reguläre Datenkommunikation vollständig geschlossen werden.

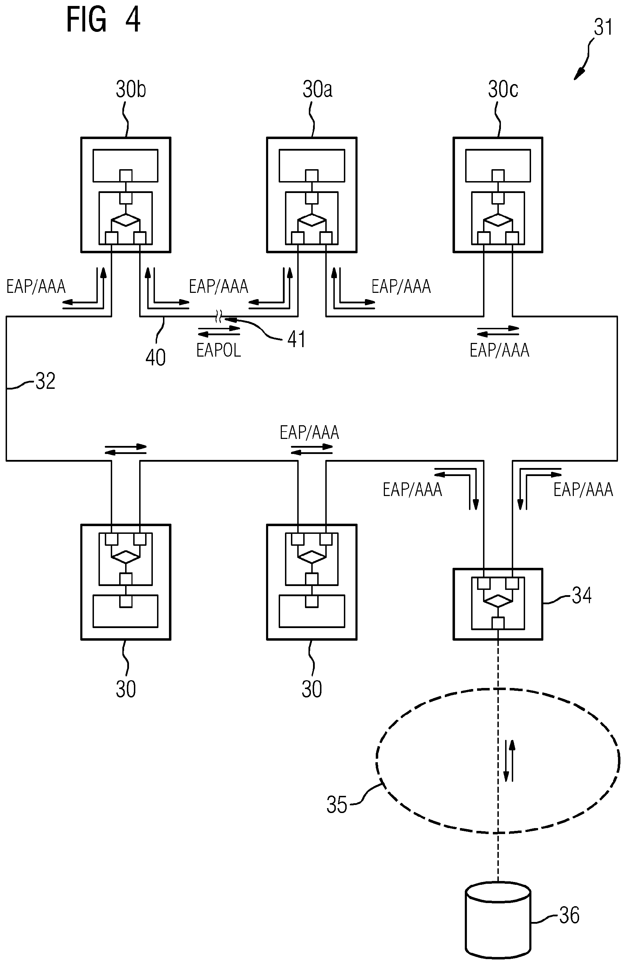

Figur 4 zeigt die Situation nach einer auf eine Unterbrechung einer Leitung folgenden Wiederherstellung der Kommunikationsverbindung. Hierzu wird angenommen, dass die Kommunikationsleitung 40 an der Unterbrechungsstelle 41 unterbrochen war. Aufgrund der Ringstruktur ist eine Datenkommunikation mit allen Geräten auch während der Unterbrechung sichergestellt. Nach Wiederherstellung der Verbindung müssen die beiden Geräte 30a, 30b, die direkt benachbart zur Unterbrechungsstelle 41 liegen, ihre Kommunikationsports miteinander neu authentifizieren.

Eine solche gegenseitige Authentifizierung findet prinzipiell nach demselben Schema statt, wie es bereits zu Figur 3 erläutert worden ist. Zwischen den Geräten werden lokal Authentifizierungsanfragen (EAPOL Nachrichten) ausgetauscht. Daraufhin sendet jedes der Geräte die Authentifizierungsinformation des jeweils anderen Gerätes in duplizierten Nachrichten (EAP/AAA) in beiden Übertragungsrichtungen an den Authentifizierungsserver 36 weiter, der bei positiver Überprüfung die jeweiligen Geräte erneut zum Kommunikationsnetz zulässt. Nach erfolgreicher Authentifizierung kann der Datenverkehr an der unterbrochenen Stelle wieder aufgenommen werden, so dass die Redundanz wiederhergestellt wird.

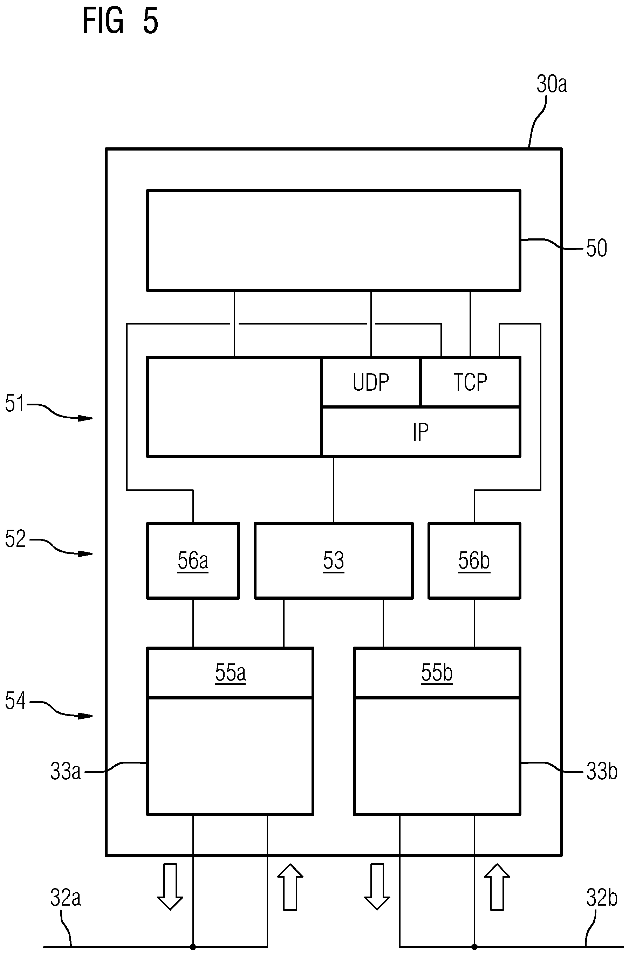

Figur 5 zeigt schließlich den schematischen Aufbau der Kommunikationsstruktur des Gerätes 30a (die Geräte 30, 30a-c sind diesbezüglich einander entsprechend aufgebaut). Das Gerät 30a weist eine Applikationsebene 50 auf, auf der die eigentlichen Gerätefunktionen mittels einer beispielsweise auf einem Prozessor ablaufenden Gerätesoftware oder einem integrierten Logikbaustein mit Hardwarecodierung (ASIC, FPGA) ausgeführt werden. Zur externen Kommunikation greift die Applikationsebene 50 auf eine Transport-/Netzwerkebene 51 (Transport Layer, Network Layer) zu, die Protokollstacks für die Echtzeitkommunikation ("hard real-time stack") sowie die Protokolle UDP, TCP und IP aufweist.

Diese Transport-/Netzwerkebene 51 steht mit einer Redundanzeinheit 53 einer Verbindungsebene 52 (Link Layer) in Verbindung, die wiederum auf einer physikalischen Ebene 54 (Physical Layer) mit dem ersten Kommunikationsport 33a und dem zweiten Kommunikationsport 33b des Gerätes 30a verbunden ist. Die Kommunikationsports 33a bzw. 33b stehen zum Datenaustausch mit dem in Figur 5 nur angedeuteten Kommunikationsring 32 in Verbindung.

Funktional zwischen den Kommunikationsports 33a und 33b und der Redundanzeinheit 53 sind eine erste bzw. eine zweite Portzugriffssteuereinheit 55a bzw. 55b angeordnet. Die jeweilige Portzugriffssteuereinheit 55a bzw. 55b ist daneben jeweils mit einer Authentifizierungseinrichtung 56a bzw. 56b verbunden. Die Authentifizierungseinrichtungen 56a, b sind darüber hinaus mit der TCP-Protokolleinheit der Transport-/Netzwerkebene 51 verbunden.

Die geräteseitige Authentifizierung wird wie nachfolgend beschrieben durchgeführt. Die beiden Instanzen der Portzugriffssteuereinheit 55a bzw. 55b dienen als protokollfreie Zwischenschicht ("protocol-less shim") und können wahlweise z.B. als "Port Access Controller" PAC im Sinne der IEEE 802.1X-2020 oder als "MAC Security Entity" (SecY) im Sinne des IEEE 802.1AE MAC Security (MACsec) mit zusätzlicher Datenverschlüsselung implementiert werden.

Jede Portzugriffssteuereinheit 55a, 55b ist mit einem Kommunikationsport 33a, 33b, der Redundanzeinheit "Link Redundancy Entity" (LRE) und jeweils einer Instanz der Authentifizierungseinrichtungen 56a, 56b verbunden. Dabei stellen die Authentifizierungseinrichtungen 56a, 56b beispielsweise Authentifizierungsprotokoll-Maschinen gemäß der IEEE 802.1X-2020 dar.

Die Authentifizierungseinrichtungen 56a, 56b erzeugen zum Anstoßen der Authentifizierung des Geräts 30a die Authentifizierungsanfragen und übermitteln sie über die jeweilige Portzugriffssteuerung 55a, 55b zur Übertragung an den Kommunikationsring 32 an den jeweiligen Kommunikationsport 33a, 33b. Damit werden Nachrichten (z.B. EAPOL Nachrichten) im Zusammenhang mit der Authentifizierung immer zwischen der jeweiligen Authentifizierungseinrichtung 56a, 56b und dem jeweiligen Kommunikationsport 33a, 33b ausgetauscht. Den Authentifizierungsanfragen wird hierbei kein Redundanz-Header beigefügt.

Die in den Nachbargeräten 30b, 30c vorhandenen Authentifizierungseinrichtungen senden und empfangen ihre der Authentifizierung dienenden Nachrichten (z.B. EAP/AAA Nachrichten) gemäß der Authenticator-Rolle des Standards IEEE 802.1X. Dabei werden diese Nachrichten für ihre jeweilige Übertragungsrichtung dupliziert. Die jeweilige Authentifizierungseinrichtung 56a, 56b ist intern mit dem TCI/IP Protokoll-Stack verbunden, so dass solche Nachrichten über die Redundanzeinheit 53 gesendet werden können. Die Gründe für die Verbindung der Authentifizierungseinrichtungen 56a, 56b mit dem TCP/IP Protokoll-Stack sind einerseits, dass (das durch die jeweilige Authentifizierungseinrichtung 56a, 56b generierten bzw. konsumierten) EAP/AAA-Nachrichten auf die Protokolle TLS/TCP/IP aufsetzen, und andererseits, dass das Senden/Empfangen dieser Nachrichten zur Duplikateerzeugung bzw. -eliminierung über die Redundanzeinheit 53 erfolgen muss.

Damit werden diese Nachrichten (z.B. die EAP/AAA Nachrichten) über die Redundanzeinheit 53 und die beiden Kommunikationsports 33a, 33b gesendet und empfangen. Die Redundanzeinheit 53 führt die Duplizierung (senden) bzw. Duplikateeliminierung (empfangen) der Nachrichten durch und fügt zum Senden den Redundanz-Header ("HSR-tag") ein bzw. entfernt diesen beim Empfang, wie sie es für jede "normale" Datenkommunikation tun würde. Die Portzugriffssteuerungen 55a, 55b implementieren dabei die Filterfunktion, die solchen Nachrichten erlauben, während des Authentifizierungsvorgangs zwischen den Kommunikationsports 33a, 33b und der Redundanzeinheit 53 übermittelt zu werden.

Nach der erfolgreichen Authentifizierung des Gerätes 30a sorgen die Portzugriffsteuereinheiten 55a, 55b dafür, dass der Datenaustausch regulär zwischen der Redundanzeinheit 53 und den Kommunikationsports 33a, 33b erfolgt. Damit dienen die Portzugriffssteuereinheiten 55a, 55b als statusabhängige Umschalter der Kommunikation zwischen dem jeweiligen Kommunikationsport einerseits und der Authentifizierungseinrichtung 56a, 56b bzw. der Redundanzeinheit 53 andererseits.

Im Ergebnis wird die Authentifizierung unabhängig einerseits von der ersten Authentifizierungseinrichtung 56a hinsichtlich der einen Übertragungsrichtung im Kommunikationsring 32 und andererseits von der zweiten Authentifizierungseinrichtung 56b hinsichtlich der zweiten Übertragungsrichtung des Kommunikationsrings 32 durchgeführt.

Neben dem in Figur 5 beschriebenen funktionellen Aufbau des Gerätes 30a, der in entsprechender Weise auf die anderen Geräte 30, 30b, 30c übertragbar ist, werden keine Änderungen oder Erweiterungen hinsichtlich der einzelnen Komponenten des Kommunikationsnetzes nötig, so dass die beschriebene Lösung voll kompatibel mit den Standards IEEE 802.1X and IEC 62439-3 HSR ist.

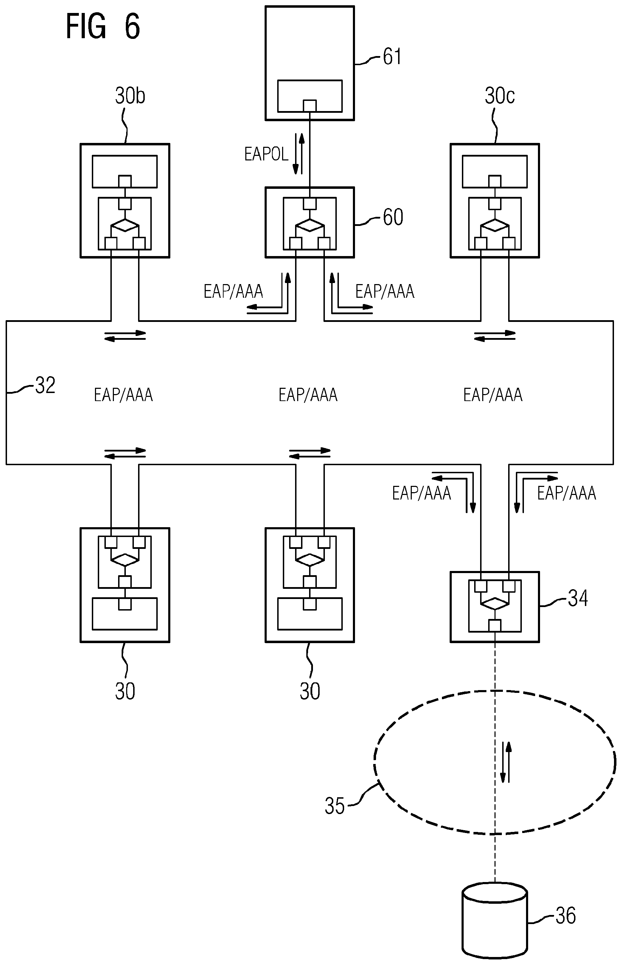

In Figur 6 ist die Situation dargestellt, in der ein Gerät, das nur einen Kommunikationsport aufweist (im Sinne des Standards IEC 62439-3 ein "Single Attached Node" - SAN), über ein Redundanzvorschaltgerät, z.B. eine sogenannte RedBox, an das Kommunikationsnetz angeschlossen ist. Ein Redundanzvorschaltgerät umfasst hierbei mindestens drei Kommunikationsports, wobei es mit zwei Kommunikationsports redundant an die beiden Teilnetze Nachbargeräte des Kommunikationsrings angeschlossen ist und mit dem dritten Kommunikationsport mit dem Gerät in Verbindung steht.

Gemäß Figur 6 ist ein Gerät 61 direkt mit dem Redundanzvorschaltgerät 60 verbunden ist. In diesem Fall sendet das Gerät 61 zu seiner Authentifizierung eine Authentifizierungsanfrage (z.B. eine EAPOL Nachricht) an das Redundanzvorschaltgerät 60. Im Sinne des Standards IEEE 802.1X übernimmt hierbei das Gerät 61 die Rolle des "Supplicants" und das Redundanzvorschaltgerät 60 die Rolle des "Authenticators". Das Redundanzvorschaltgerät 60 dupliziert die in der Authentifizierungsanfrage enthalte Authentifizierungsinformation und sendet sie daraufhin über die beiden redundanten Kommunikationsports an die Nachbargeräte 30b, 30c des Kommunikationsrings 32 (z.B. in Form von EAP/AAA Nachrichten). Seitens des Authentifizierungsservers wird, wie bereits zu Figur 3 erläutert, anhand der Authentifizierungsinformation eine Prüfung durchgeführt, ob das Gerät 61 zum Kommunikationsnetz zugelassen werden darf. Die Antwort wird an das Redundanzvorschaltgerät 60 gesendet, das bei erfolgreicher Authentifizierung seinen mit dem Gerät 61 verbundenen Kommunikationsport für die reguläre Datenkommunikation öffnet.

Das Gerät 61 könnte auch über eine (nicht dargestellte) Ethernet Bridge mit dem Redundanzvorschaltgerät 60 verbunden sein. Diese Variante besitzt den Vorteil, dass das Redundanzvorschaltgerät 60 neben dem Gerät 61 auch mit weiteren Geräten verbunden sein kann. In diesem Fall übernimmt der Switch die Rolle des "Authenticators" und empfängt die Authentifizierungsanfrage vom Gerät 61. Daraufhin wird die darin enthaltene Authentifizierungsinformation in einer Nachricht (z.B. EAP/AAA) an das Redundanzvorschaltgerät 60 weitergeleitet. Dort findet die Duplizierung der Nachricht statt und die Authentifizierungsinformation wird in beide Übertragungsrichtungen des Kommunikationsrings 32 weitergeleitet. Die Prüfung im Authentifizierungsserver erfolgt wie zu Figur 3 beschrieben. Bei einem positiven Ergebnis der Prüfung veranlasst der Authentifizierungsserver eine Öffnung des Ports des Switches zum Gerät 61.

Eine Authentifizierung des Redundanzvorschaltgerätes 60 selbst findet wie zum Gerät 30a beschrieben statt (vgl. z.B. Figur 3). Dabei können sich das Redundanzvorschaltgerät 60 und die Nachbargeräte 30b, 30c gegenseitig authentifizieren und dabei quasi eine kombinierte "Supplicant"/"Authenticator" Rolle einnehmen. Es kann vorkommen, dass zur Authentifizierung dienende Nachrichten (z.B. EAP/AAA-Nachrichten) über noch nicht authentifizierte Ports gesendet werden; dies kann insbesondere bei der beschriebenen gegenseitigen Authentifizierung der Fall sein. Hierfür können die Geräte spezielle Filter oder reservierte VLANs aufweisen, die für den regulären Datenaustausch gesperrt sind.

Mit dem nicht redundanten Kommunikationsport des Redundanzvorschaltgerätes könnte auch ein Zugangspunkt eines Teilnetzes eines PRP-Kommunikationsnetzes verbunden sein. In einem gemäß IEC 62439-3 PRP aufgebauten Kommunikationsnetz wird eine Nachricht dupliziert und über zwei redundante Teilnetze zu dem Empfänger gesendet, der die zuerst eintreffende Nachricht verarbeitet und die andere als Duplikat verwirft. In dem oben genannten Fall müsste zur vollständigen Verbindung des HSR-Kommunikationsrings mit einem PRP Kommunikationsnetz ein weiteres Redundanzvorschaltgerät mit dem Zugangspunkt des anderen Teilnetzes verbunden sein. Das Redundanzvorschaltgerät stellt in diesem Fall eine HSR-PRP-RedBox dar. In ähnlicher Weise können über vier Redundanzvorschaltgeräte, wovon jeweils zwei über ihre nicht redundanten Kommunikationsports gekoppelt sind, zwei HSR-Kommunikationsringe miteinander verbunden sein. Diese Redundanzvorschaltgeräte wären dann als HSR-HSR-RedBoxen bzw. in einem integrierten Gerät als sogenannte "QuadBox" anzusehen. Bei den genannten Beispielen kann ein jeweiliges Redundanzvorschaltgerät in einer kombinierten "Supplicant"/"Authenticator" Rolle zur gegenseitigen Authentifizierung der jeweils anderen angeschlossenen Redundanzvorschaltgeräte bzw. Switches oder Zugangspunkte dienen.

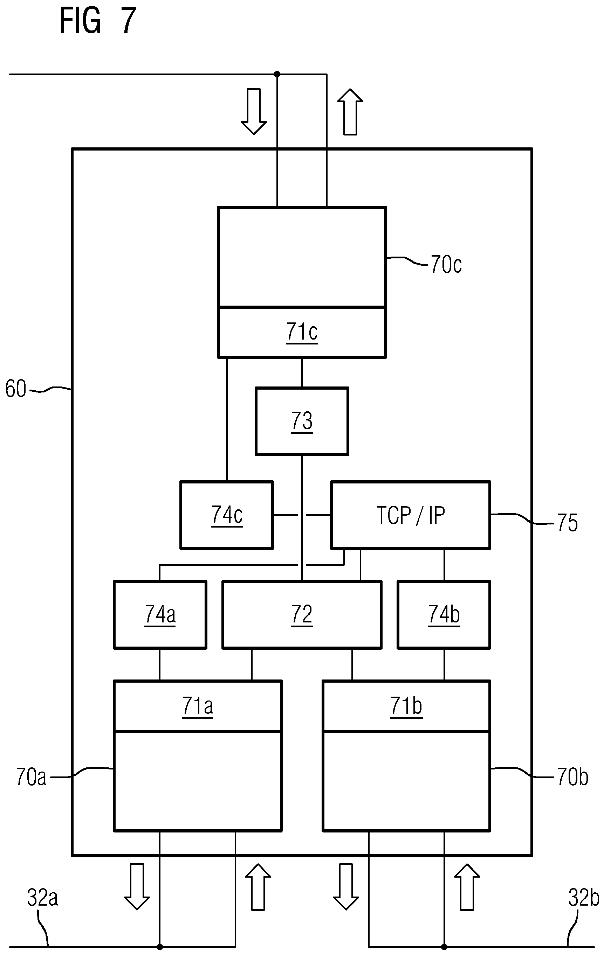

Figur 7 zeigt schließlich den Aufbau der Kommunikationsstruktur des Redundanzvorschaltgerätes 60 mit seinen drei Kommunikationsports 70a, 70b, 70c, wovon die beiden redundanten Kommunikationsports 70a, 70b mit den beiden Nachbargeräten 30b und 30c (vgl. Figur 6) in Verbindung stehen und der nicht redundante Kommunikationsport 70c ("Interlink Port") entweder direkt oder indirekt mit einem Gerät 61, das nur einen Kommunikationsport aufweist, verbunden ist. In der Praxis können auch mehrere Instanzen des nicht redundanten Kommunikationsports 70c vorhanden sein. Jeder Kommunikationsport 70a-c ist mit einer Portzugriffssteuereinheit 71a-c verbunden, die entsprechend zu den Portzugriffssteuereinheiten 55a, 55b (vgl. Figur 5) ausgebildet sein können. Jede der Portzugriffsteuereinheiten 71a-c steht für die reguläre Datenkommunikation mit einer Redundanzeinheit 72 in Verbindung, die wie die Redundanzeinheit 53 (vgl. Figur 5) ausgebildet sein kann. Der nicht redundante Kommunikationsport 70c steht dabei über eine MAC Relaiseinheit ("Media Access Control Relay Entity") 73 mit der Redundanzeinheit 72 in Verbindung. Die MAC Relaiseinheit 73 führt eine Bridge Funktionalität gegenüber dem einen oder mehreren nicht redundanten Kommunikationsports 70c aus.

Darüber hinaus sind die Portzugriffssteuereinheiten 70a-c mit Authentifizierungseinrichtungen 74a-c verbunden, die entsprechend zu den Authentifizierungseinrichtungen 56a, 56b ausgebildet sein können und die "Supplicant" und "Authenticator" Rollen gemäß IEEE 802-1X ausführen. Die Portzugriffssteuereinheiten 71a-c sind dazu ausgebildet, während der Authentifizierung Authentifizierungsanfragen (EAPOL Nachrichten) und andere der Authentifizierung dienende Nachrichten (EAP/AAA Nachrichten) zwischen den Kommunikationsports 70a-c und den Authentifizierungseinrichtungen 74a-c auszutauschen und nach erfolgreicher Authentifizierung die reguläre Datenkommunikation zwischen den Kommunikationsports 70a-c und der Redundanzeinheit 72 abzuwickeln.

Die Authentifizierung wird auch hier von den Authentifizierungseinrichtungen 74a-c unabhängig für jeden Kommunikationsport 70a-c durchgeführt. In diesem Zusammenhang senden und empfangen die Authentifizierungseinrichtungen 74a-c die zur Authentifizierung dienenden Nachrichten (z.B. EAPOL, EAP/AAA). Zu diesem Zweck sind die Authentifizierungseinrichtungen 74a-c mit einem TCP/IP Protokollstack 75 des Redundanzvorschaltgeräts 60 verbunden. Dabei werden Nachrichten (EAP/AAA), die mit dem Authentifizierungsserver ausgetauscht werden, zum Zweck der Authentifizierung dupliziert bzw. es wird eine Duplikateeliminierung durchgeführt, wozu sie über die Redundanzeinheit 72 gesendet werden, die auch das Anfügen der Redundanz-Header (HSR tag) vornimmt. Dabei bewirkt die spezielle Filterfunktion der Portzugriffssteuereinheiten 71a-c, dass zur Authentifizierung dienende Nachrichten auch vor der erfolgreichen Authentifizierung über die Redundanzeinheit 72 gesendet werden können. Somit kann mit den Redundanzvorschaltgeräten eine Authentifizierung von Geräten mit nur einem Kommunikationsport über ihren nicht-redundanten Kommunikationsport vorgenommen werden (in diesem Fall nimmt das Redundanzvorschaltgerät die Rolle des Authenticators gemäß IEEE 802.1X ein). Darüber hinaus können benachbarte Switche in kombinierter Supplicant / Authenticator Rolle authentifiziert werden. Die Redundanzvorschaltgeräte können über die bereits erwähnte spezielle Filterfunktion bzw. ein reserviertes VLAN dafür sorgen, dass zur Authentifizierung dienende Nachrichten (EAP/AAA Nachrichten) auch vor erfolgreich abgeschlossener Authentifizierung bearbeitet und versendet werden können. Es besteht die Möglichkeit, Redundanzvorschaltgeräte über einen Netzwerkmanager über ein geeignetes Protokoll (z.B. SNMP) oder andere Mittel (z.B. Kommandozeilenschnittstelle, Webbasierte Schnittstelle etc.) hinsichtlich ihrer Authentifizierungsfunktion zu aktivieren bzw. zu deaktivieren bzw. ihnen bestimmte Daten (z.B. Zertifikate) bereitzustellen.

Zusammengefasst stellt die Erfindung eine Lösung zur Verfügung, wie eine Authentifizierung eines Gerätes in einem redundant aufgebauten Kommunikationsnetz erfolgen kann. Insbesondere erfolgt die Authentifizierung portbasiert entsprechend dem Standard IEEE 802.1X in einem gemäß dem Standard IEC 62439-3 HSR ausgebildeten Kommunikationsnetz. Dabei werden auch Redundanzvorschaltgeräte berücksichtigt. Die beschriebene Lösung ist besonders vorteilhaft in industriellen Automatisierungsanlagen einsetzbar, beispielsweise bei der Automatisierung von Energieversorgungsnetzen. Hierdurch können Ausfallsicherheit auf der einen Seite und höchste Cyber Security Anforderungen auf der anderen Seite wirksam miteinander verbunden werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Verfahren zum Authentifizieren eines Gerätes (30a) in einem Kommunikationsnetz (31) einer Automatisierungsanlage, bei dem
- eine das Gerät (30a) angebende Authentifizierungsinformation an einen Authentifizierungsserver (36) übertragen wird und der Authentifizierungsserver (36) basierend auf der Authentifizierungsinformation das Gerät (30a) als Teilnehmer in dem Kommunikationsnetz (31) zulässt oder ablehnt;
**dadurch gekennzeichnet, dass**
- das Kommunikationsnetz (31) einen Kommunikationsring (32) aufweist, der neben dem Gerät (30a) zumindest ein erstes Nachbargerät (30b) und ein zweites Nachbargerät (30c) aufweist, wobei das Gerät (30a) zur redundanten Datenübertragung über einen ersten Kommunikationsport (33a) mit dem ersten Nachbargerät (30b) und über einen zweiten Kommunikationsport (33b) mit dem zweiten Nachbargerät (30c) verbunden ist;
- das Gerät (30a) zum Start der Authentifizierung über den ersten Kommunikationsport (33a) eine erste die Authentifizierungsinformation enthaltende Authentifizierungsanfrage an das erste Nachbargerät (30b) sendet und über den zweiten Kommunikationsport (33b) eine zweite die Authentifizierungsinformation enthaltende Authentifizierungsanfrage an das zweite Nachbargerät (30c) sendet;
- das erste Nachbargerät (30b) und das zweite Nachbargerät (30c) die jeweilige empfangene Authentifizierungsinformation duplizieren und in beiden Übertragungsrichtungen über den Kommunikationsring (32) an einen mit dem Kommunikationsring (32) verbundenen Authentifizierungsserver (36) senden;
- der Authentifizierungsserver (36) anhand der jeweiligen empfangenen Authentifizierungsinformation jeweils eine Prüfung der Authentizität des Geräts (30a) durchführt und als Ergebnis der Prüfung das Gerät (30a) als Teilnehmer in dem Kommunikationsnetz (31) zulässt oder ablehnt.

2. Verfahren nach Anspruch 1,
**dadurch gekennzeichnet, dass**
- das Kommunikationsnetz (31) zur redundanten Datenübertragung gemäß dem Standard IEC 62439-3 HSR ausgebildet ist.

3. Verfahren nach Anspruch 1 oder 2,
**dadurch gekennzeichnet, dass**
- das Gerät (30a) und die beiden Nachbargeräte (30b, 30c) eine gegenseitige Authentifizierung durchführen.

4. Verfahren nach einem der vorangehenden Ansprüche,
**dadurch gekennzeichnet, dass**
- zur Prüfung der Authentizität des Geräts (30a) die empfangene Authentifizierungsinformation mit einer Referenz-Authentifizierungsinformation verglichen wird und/oder ein in der Authentifizierungsinformation enthaltenes Zertifikat hinsichtlich seiner Vertrauenswürdigkeit geprüft wird; und
- bei Übereinstimmung das Gerät (30a) in dem Kommunikationsnetz (31) zugelassen wird.

5. Verfahren nach einem der vorangehenden Ansprüche,
**dadurch gekennzeichnet, dass**
- als Reaktion auf die Prüfung eine jeweilige Authentifizierungsantwort an das erste Nachbargerät (30b) und das zweite Nachbargerät (30c) gesendet wird, die angibt, ob das jeweilige Nachbargerät (30b, 30c) das Gerät (30a) zur Kommunikation in dem Kommunikationsnetz (31) zulassen darf oder nicht.

6. Verfahren nach einem der Ansprüche 1 bis 5,
**dadurch gekennzeichnet, dass**
- der Authentifizierungsserver (36) über ein Redundanzvorschaltgerät (34) mit dem Kommunikationsring (32) verbunden ist, wobei das Redundanzvorschaltgerät (34) über zwei Kommunikationsports mit dem Kommunikationsring (32) und über einen weiteren Kommunikationsport mit dem Authentifizierungsserver (36) verbunden ist.

7. Verfahren nach einem der Ansprüche 1 bis 5,
**dadurch gekennzeichnet, dass**
- der Authentifizierungsserver (36) über zwei Kommunikationsports mit dem Kommunikationsring (32) verbunden ist.

8. Verfahren nach einem der vorangehenden Ansprüche,
**dadurch gekennzeichnet, dass**
- im Falle einer Unterbrechung des Kommunikationsrings (32) die beiden an die Stelle (41) der Unterbrechung angrenzenden Geräte nach Wiederherstellung der Verbindung jeweils eine erneute Authentifizierung durchführen.

9. Verfahren nach einem der vorangehenden Ansprüche,
**dadurch gekennzeichnet, dass**
- das Gerät (30a) eine mit dem ersten Kommunikationsport (33a) über eine erste Portzugriffssteuereinheit (55a) verbundene erste Authentifizierungseinrichtung (56a) und eine mit dem zweiten Kommunikationsport (33b) über eine zweite Portzugriffssteuereinheit (55b) verbundene zweite Authentifizierungseinrichtung (56b) aufweist, wobei die jeweilige Authentifizierungseinrichtung (56a, 56b) die jeweilige Authentifizierungsanfrage erzeugt und über den jeweiligen Kommunikationsport (33a, 33b) aussendet.

10. Verfahren nach Anspruch 9,
**dadurch gekennzeichnet, dass**
- die erste Portzugriffssteuereinheit (55a) und die zweite Portzugriffssteuereinheit (55b) mit einer Redundanzeinheit (53) des Geräts (30a) verbunden sind und dazu eingerichtet sind, während der Authentifizierung des Geräts (30a) ausschließlich zur Authentifizierung des Gerätes dienende Nachrichten zwischen der Redundanzeinheit (53) und den Kommunikationsports (33a, 33b) weiterzuleiten und die Weiterleitung anderer Nachrichten zu blockieren und erst nach erfolgreicher Authentifizierung des Geräts (30a) die anderen Nachrichten zwischen der Redundanzeinheit (53) und den Kommunikationsports (33a, 33b) weiterzuleiten.

11. Verfahren nach Anspruch 10,
**dadurch gekennzeichnet, dass**
- die Redundanzeinheit (53) nach erfolgreicher Authentifizierung des Geräts (30a) von dem Gerät (30a) zu versendende Telegramme dupliziert und über beide Kommunikationsports (33a, 33b) versendet und von dem Gerät (30a) empfangene Telegramme daraufhin überprüft, ob ein identisches Telegramm bereits empfangen worden ist, und das empfangene Telegramm abhängig von der Prüfung an eine Applikationsebene des Geräts (30a) weiterleitet oder verwirft.

12. Verfahren nach einem der Ansprüche 1-8,
**dadurch gekennzeichnet, dass**
- bei einem über einen einzelnen Kommunikationsport an ein Redundanzvorschaltgerät angeschlossenen Gerät, das Gerät die Authentifizierungsanfrage erzeugt und über den einzelnen Kommunikationsport aussendet und das Redundanzvorschaltgerät die Authentifizierungsinformation des Gerätes über einen ersten Kommunikationsport an das erste Nachbargerät sendet und über einen zweiten Kommunikationsport an das zweite Nachbargerät sendet.

13. Kommunikationsfähiges Gerät (30a) zum Anschluss an ein Kommunikationsnetz (31) einer Automatisierungsanlage, wobei das Kommunikationsnetz (31) einen Kommunikationsring (32) aufweist, wobei
- das Gerät (30a) zur redundanten Datenübertragung einen ersten Kommunikationsport (33a) zur Verbindung mit einem ersten Nachbargerät (30b) und einen zweiten Kommunikationsport (33b) zur Verbindung mit einem zweiten Nachbargerät (30c) aufweist; **dadurch gekennzeichnet, dass**
- das Gerät (30a) zur Durchführung eines Verfahrens gemäß einem der vorigen Ansprüche 1 - 11 ausgebildet ist.

14. Gerät (30a) nach Anspruch 13,
**dadurch gekennzeichnet, dass**
- das Gerät (30a) eine mit dem ersten Kommunikationsport (33a) über eine erste Portzugriffssteuereinheit (55a) verbundene erste Authentifizierungseinrichtung (56a) aufweist, die dazu eingerichtet ist, zum Start einer Authentifizierung des Geräts (30a) eine erste eine Authentifizierungsinformation enthaltende Authentifizierungsanfrage zu erzeugen;
- das Gerät (30a) eine mit dem zweiten Kommunikationsport (33b) über eine zweite Portzugriffssteuereinheit (55b) verbundene zweite Authentifizierungseinrichtung (56b) aufweist, die dazu eingerichtet ist, zum Start einer Authentifizierung des Geräts (30a) eine zweite die Authentifizierungsinformation enthaltende Authentifizierungsanfrage zu erzeugen; und
- das Gerät (30a) dazu eingerichtet ist, über den ersten Kommunikationsport (33a) die erste Authentifizierungsanfrage auszusenden und über den zweiten Kommunikationsport (33b) die zweite Authentifizierungsanfrage auszusenden.

15. Gerät (30a) nach Anspruch 14,
**dadurch gekennzeichnet, dass**
- die erste Portzugriffssteuereinheit (55a) und die zweite Portzugriffssteuereinheit (55b) mit einer Redundanzeinheit (53) des Geräts (30a) verbunden und dazu eingerichtet sind, während der Authentifizierung des Geräts (30a) ausschließlich zur Authentifizierung des Gerätes dienende Nachrichten zwischen der Redundanzeinheit (53) und den Kommunikationsports (33a, 33b) weiterzuleiten und die Weiterleitung anderer Nachrichten zu blockieren und erst nach erfolgreicher Authentifizierung des Geräts (30a) die anderen Nachrichten zwischen der Redundanzeinheit (53) und den Kommunikationsports (33a, 33b) weiterzuleiten.

16. Gerät (30a) nach Anspruch 15,
**dadurch gekennzeichnet, dass**
- die Redundanzeinheit (53) dazu eingerichtet ist, nach erfolgreicher Authentifizierung des Geräts (30a) von dem Gerät (30a) zu versendende Telegramme zu duplizieren und über beide Kommunikationsports (33a, 33b) zu versenden und von dem Gerät (30a) empfangene Telegramme daraufhin zu überprüfen, ob ein identisches Telegramm bereits empfangen worden ist, und das empfangene Telegramm abhängig von der Prüfung an eine Applikationsebene (50) des Geräts (30a) weiterzuleiten oder zu verwerfen.

17. Authentifizierungsserver (36),
**dadurch gekennzeichnet, dass**
- der Authentifizierungsserver (36) mittelbar oder unmittelbar mit einem Kommunikationsring (32) eines Kommunikationsnetzes verbunden und dazu eingerichtet ist, mit einem Gerät nach einem der Ansprüche 13-16 ein Verfahren gemäß einem der Ansprüche 1-12 durchzuführen.

18. Kommunikationsnetz (31) einer Automatisierungsanlage mit
- einem Kommunikationsring (32);
- einem Authentifizierungsserver (36); und
- einem zu authentifizierenden Gerät (30a),
**dadurch gekennzeichnet, dass**
- das Kommunikationsnetz (31) dazu ausgebildet ist, zur Authentifizierung des Geräts (30a) ein Verfahren gemäß einem der Ansprüche 1 bis 12 durchzuführen.

19. Kommunikationsnetz nach Anspruch 18,
**dadurch gekennzeichnet, dass**
- das Gerät (30a) entsprechend einem der Ansprüche 12 bis 15 ausgebildet ist und über seinen ersten Kommunikationsport (33a) mit einem ersten Nachbargerät (30b) des Kommunikationsrings (32) und mit seinem zweiten Kommunikationsport (33b) mit einem zweiten Nachbargerät (30c) des Kommunikationsrings (32) in Verbindung steht.
